(19) Europäisches Patentamt
European Patent Office
Office européen des brevets

(11) **EP 4 436 848 B1**

(12) **FASCICULE DE BREVET EUROPEEN**

(45) Date de publication et mention
de la délivrance du brevet:
**27.08.2025   Bulletin 2025/35**

(21) Numéro de dépôt: **22801850.3**

(22) Date de dépôt: **17.10.2022**

(51) Classification Internationale des Brevets (IPC):
**B60W 30/16** *(2020.01)*

(52) Classification Coopérative des Brevets (CPC):
**B60W 30/16;** B60W 2420/403; B60W 2420/408;
B60W 2520/10; B60W 2554/802

(86) Numéro de dépôt international:
**PCT/FR2022/051954**

(87) Numéro de publication internationale:
**WO 2023/089258 (25.05.2023 Gazette 2023/21)**

(54) **PROCÉDÉ DE RÉGULATION DE VITESSE D'UN VÉHICULE À PARTIR D'UN OBJET CIBLE**

VERFAHREN ZUR STEUERUNG DER GESCHWINDIGKEIT EINES FAHRZEUGS AUF BASIS EINES ZIELOBJEKTS

METHOD FOR CONTROLLING THE SPEED OF A VEHICLE BASED ON A TARGET OBJECT

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité:  **22.11.2021   FR 2112310**

(43) Date de publication de la demande:
**02.10.2024   Bulletin 2024/40**

(73) Titulaire: **Stellantis Auto SAS
78300 Poissy (FR)**

(72) Inventeurs:
• **GOURIET, Pascal
92320 CHATILLON (FR)**
• **REY, Alexis
92210 ST CLOUD (FR)**
• **VIVET, Luc
75016 PARIS 16 (FR)**

(74) Mandataire: **ESIP
Stellantis Auto SAS
Service REIP - YT800
43, rue Jean Pierre Timbaud
78300 Poissy (FR)**

(56) Documents cités:
EP-A1- 3 392 730    FR-A1- 3 056 530
US-A1- 2008 319 670    US-A1- 2021 309 214

EP 4 436 848 B1

## Description

### Domaine technique

La présente invention concerne les procédés et dispositifs de régulation de vitesse d'un véhicule ,notamment automobile, à partir d'un objet cible sélectionné à partir d'une liste d'objets détectés par au moins un capteur du véhicule.

### Arrière-plan technologique

Pour améliorer la sécurité routière, certains véhicules sont équipés de fonctions ou systèmes d'aide à la conduite, dit ADAS (de l'anglais « Advanced Driver-Assistance System »). Pour assurer le bon fonctionnement de ces systèmes d'aide à la conduite, une connaissance précise de l'environnement autour du véhicule est nécessaire.

L'un de ces systèmes ADAS couramment utilisés dans les véhicules est un régulateur de vitesse adaptatif ACC (de l'anglais « Adaptatif Cruise Control »). Un régulateur ACC est un équipement électronique qui accroît le confort et la sécurité des occupants du véhicule et des autres usagers en dehors du véhicule, que l'on circule en agglomération, sur route ou sur autoroute. En plus des fonctions de régulation de vitesse classique, un régulateur ACC adapte la vitesse du véhicule en fonction de la distance qui le sépare du flux de véhicules présent devant lui. Pour cela, des capteurs sont installés à l'avant du véhicule pour surveiller le flux de véhicules présent devant lui. Si l'un des capteurs situés à l'avant du véhicule détecte dans son champ d'action un véhicule cible circulant devant lui à plus faible allure, le régulateur ACC adapte la régulation de vitesse alors soumise à une vitesse de consigne, et réduit la vitesse du véhicule pour maintenir une distance de sécurité suffisante avec le véhicule cible. Au besoin, le régulateur ACC peut activer une commande de frein. Dans le cas où le véhicule cible change de voie de circulation ou accélère, le régulateur ACC peut augmenter la vitesse du véhicule jusqu'à atteindre la vitesse de consigne. Pour rappel, le régulateur ACC est un dispositif de confort, le conducteur peut l'activer et le désactiver à souhait. Il a aussi la possibilité d'ajuster la consigne de vitesse et de distance et prendre la main en appuyant sur la pédale de frein ou d'accélérateur.

Un régulateur ACC est associé à un système de perception des objets environnants. Le véhicule comprend aussi au moins un capteur situé sur l'avant du véhicule. Ces capteurs prennent des mesures qui correspondent à des objets localisés devant le véhicule. Un calculateur du système de perception des objets du véhicule fusionne ces mesures pour établir une liste L d'objets détectés. Le système de perception caractérise chaque objet détecté. La caractérisation d'un objet est constituée de plusieurs attributs dont sa position dans l'espace, sa classification et son état de déplacement. Le régulateur ACC sélectionne alors l'un des objets de la liste L d'objets détectés comme l'objet cible à partir duquel le régulateur ACC adapte la vitesse du véhicule.

Le système de perception d'objets et les capteurs présentent des imperfections qui peuvent dégrader les performances du régulateur ACC. Par exemple, la localisation physique dans l'espace des objets détectés fournie par les capteurs n'est pas très fiable. Par ailleurs, la catégorisation des objets détectés peut présenter des incertitudes qui peuvent biaiser le régulateur ACC. En effet, le régulateur ACC peut ne pas réagir de la même manière selon qu'un objet détecté est catégorisé comme étant un camion détecté à 100m ou une bicyclette détectée à 50m. De plus, un capteur peut aussi ne pas détecter des véhicules qui existent physiquement (faux négatifs) ou détecter des véhicules fantômes c'est-à-dire des véhicules qui n'existent pas physiquement (faux positifs).

Ces indicateurs de faux négatifs et faux positifs sont des grandeurs primordiales pour juger de la performance d'un régulateur ACC, tant pour une conduite sur autoroute qu'en ville En effet, pour la première, plus le ratio de faux négatifs est important, plus le conducteur se sent en insécurité et parfois, surpris par la non-réaction du véhicule peut être amené à intervenir en freinant brutalement le véhicule. Pour la seconde, plus le ratio de faux positifs est important, plus le véhicule décélère ou freine sur des cibles qui physiquement n'existe pas, le conducteur peut se lasser sur ces interventions intempestives et peut désactiver le régulateur ACC à vie et informer le grand public de la piètre performance du dispositif. Pour ces deux indicateurs, l'image peut être destructive de valeur, surtout si lesdites performances sont en écart par rapport à l'état de l'art du marché.

En outre, l'état de la technique est connu des documents US2008/319670A1 et EP3392730A1.

La présente invention a pour but de palier à au moins l'un des inconvénients susmentionnés.

### Résumé de l'invention

Un objet de la présente invention est d'améliorer la perception d'objets situés à l'avant d'un véhicule.

Un autre objet de la présente invention est d'enrichir la caractérisation des objets de la liste L utilisée pour la régulation adaptive de la vitesse d'un véhicule.

Un autre objet de la présente invention est d'améliorer la régulation de vitesse adaptative de véhicule.

Un autre objet de la présente invention est d'améliorer la sécurité routière.

Selon un premier aspect, la présente invention concerne un procédé de régulation de vitesse d'un véhicule à partir d'un objet cible sélectionné à partir d'une liste d'objets détectés par au moins un capteur du véhicule, ledit procédé comprenant les étapes suivantes pour chaque objet courant de la liste d'objets détectés :

- obtention, à partir d'au moins un capteur du véhicule, d'un premier attribut de l'objet courant indiquant si l'objet courant a été détecté par ledit au moins un capteur ;

- obtention d'un deuxième attribut de l'objet courant indiquant un niveau de confiance dudit au moins un capteur qui a détecté l'objet courant ;

- assignation d'une première valeur à un premier indicateur associé à l'objet courant si le premier attribut indique que l'objet courant a été détecté par ledit au moins un capteur du véhicule et que le deuxième attribut indique un niveau de confiance supérieur à une première valeur seuil ;

- assignation d'une deuxième valeur, inférieure à la première valeur, au premier indicateur associé à l'objet courant si le premier attribut indique que l'objet courant n'a pas été détecté par ledit au moins un capteur du véhicule ;

- obtention d'un deuxième indicateur, associé à l'objet courant, par cumul de valeurs obtenues périodiquement du premier indicateur associé à l'objet courant ;

- maintien de l'objet courant dans la liste d'objets détectés si le premier indicateur, associé à l'objet courant, est égal à la première valeur et si le deuxième indicateur, associé à l'objet courant, est supérieur à une deuxième valeur seuil ; et

- suppression de l'objet courant de la liste d'objets détectés si le deuxième indicateur est inférieur à la deuxième valeur seuil.

Selon un exemple particulier et non limitatif, la première ou deuxième valeur assignée au premier indicateur, associé à l'objet courant, est pondérée en fonction de la nature dudit au moins un capteur qui a détecté l'objet courant, d'une distance qui sépare l'objet courant du véhicule et/ou d'une vitesse du véhicule.

Selon un exemple particulier et non limitatif, une valeur du premier indicateur, associé à l'objet courant, est pondérée en fonction d'un attribut de variance de distance latérale de l'objet par rapport au véhicule.

Selon un exemple particulier et non limitatif, le deuxième indicateur, associé à l'objet courant, est obtenu par une somme pondérée de valeurs obtenues périodiquement du premier indicateur associé à l'objet courant.

Selon un exemple particulier et non limitatif, le deuxième indicateur, associé à l'objet courant, est obtenu par une somme pondérée de valeurs obtenues périodiquement du premier indicateur associé à l'objet courant, si un capteur qui a détecté l'objet courant est une caméra.

Selon un exemple particulier et non limitatif, chaque pondération de ladite somme pondérée dépend d'une valeur assignée au premier indicateur et/ou d'un nombre de capteurs ayant détectés l'objet courant et/ou d'une vitesse du véhicule.

Selon un deuxième aspect, la présente invention concerne un dispositif de régulation de vitesse d'un véhicule à partir d'un objet cible sélectionné à partir d'une liste d'objets détectés par au moins un capteur du véhicule, le dispositif comprenant une mémoire associée à un processeur configuré pour la mise en œuvre des étapes du procédé selon le premier aspect de l'invention.

Selon un troisième aspect, la présente invention concerne un véhicule, par exemple de type automobile, comprenant un dispositif tel que décrit ci-dessus selon le deuxième aspect de l'invention.

Selon un quatrième aspect, la présente invention concerne un programme d'ordinateur qui comporte des instructions adaptées pour l'exécution des étapes du procédé selon le premier aspect de l'invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, l'invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

**Brève description des figures**

D'autres caractéristiques et avantages de l'invention ressortiront de la description des exemples de réalisation non limitatifs de l'invention ci-après, en référence aux figures 1 à 3 annexées, sur lesquelles :

[Fig. 1] illustre schématiquement un exemple d'un environnement 1 pour mettre en œuvre la présente invention, selon un exemple de réalisation particulier et non limitatif de la présente invention ;

[Fig. 2] illustre schématiquement un dispositif 2 configuré pour réguler la vitesse d'un véhicule à partir d'un objet cible sélectionné à partir d'une liste d'objets détectés par au moins un capteur du véhicule, selon un exemple de réalisation particulier et non limitatif de la présente invention ;

[Fig. 3] illustre un organigramme des différentes étapes d'un procédé de régulation de vitesse d'un véhicule à partir d'un objet cible sélectionné à partir d'une liste d'objets détectés par au moins un capteur du véhicule, selon un exemple de réalisation particulier et non limitatif de la présente invention.

**Description des exemples de réalisation**

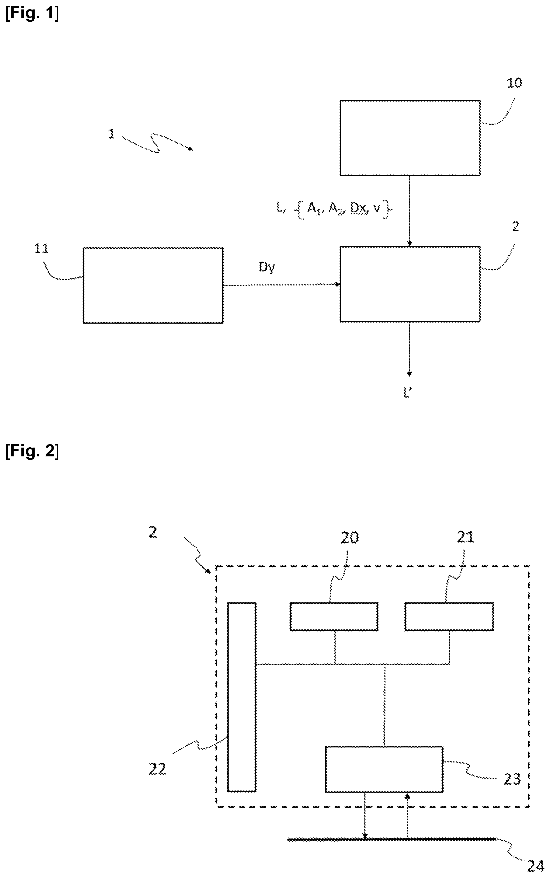

Un procédé et un dispositif de régulation de vitesse d'un véhicule à partir d'un objet cible sélectionné à partir d'une liste d'objets détectés par au moins un capteur du véhicule, vont maintenant être décrits dans ce qui va suivre en référence conjointement aux figures 1 à 3. Des mêmes éléments sont identifiés avec des mêmes signes de référence tout au long de la description qui va suivre.

Selon un exemple particulier et non limitatif de réalisation de l'invention, une liste d'objets détectés par le système de perception d'objets du véhicule est consolidée par un procédé comprenant les étapes suivantes pour chaque objet courant de la liste d'objets détectés : obtention, à partir d'au moins un capteur du véhicule, d'un premier attribut de l'objet courant indiquant si l'objet courant a été détecté par ledit au moins un capteur ; obtention d'un deuxième attribut de l'objet courant indiquant un niveau de confiance dudit au moins un capteur qui a détecté l'objet courant ; assignation d'une première valeur à un premier indicateur associé à l'objet courant si le premier attribut indique que l'objet courant a été détecté par ledit au moins un capteur du véhicule et que le deuxième attribut indique un niveau de confiance supérieur à une première valeur seuil ; assignation d'une deuxième valeur, inférieure à la première valeur, au premier indicateur associé à l'objet courant si le premier attribut indique que l'objet courant n'a pas été détecté par ledit au moins un capteur du véhicule ; obtention d'un deuxième indicateur, associé à l'objet, par cumul de valeurs obtenues périodiquement dudit premier indicateur associé à l'objet courant ; maintien de l'objet courant dans la liste L d'objets détectés si le premier indicateur associé à l'objet courant est égal à la première valeur et si le deuxième indicateur associé à l'objet courant est supérieur à une deuxième valeur seuil ; et suppression de l'objet courant de la liste d'objets détectés si le deuxième indicateur est inférieur à la deuxième valeur seuil.

Le procédé est décliné par autant de capteurs existant physiquement dans le véhicule et qui contribuent effectivement au régulateur ACC.

Le procédé est avantageux car il permet de réduire de façon significative les faux positifs dans la liste d'objets détectés et une partie des faux négatifs.

[Fig. 1] illustre schématiquement un exemple d'un environnement 1 pour mettre en œuvre la présente invention, selon un exemple de réalisation particulier et non limitatif de la présente invention.

Un véhicule (non représenté) comprend des capteurs associés à un système de perception d'objet(s) 10 pour détecter des objets situés sur l'avant du véhicule. Certains de ces objets correspondent à des objets cibles candidats mais d'autres correspondent à des objets fantômes. Le système de perception d'objet(s) 10 forme une liste L d'objets détectés en ajoutant un identifiant (en anglais « handle ») d'un objet nouvellement détecté à la liste L d'objets détectés et en supprimant l'identifiant d'un objet qui doit être supprimé de la liste L.

Les capteurs peuvent être par exemple des radars à ondes millimétriques disposés, notamment, sur l'avant du véhicule. Chaque radar est adapté pour émettre des ondes électromagnétiques et pour recevoir les échos de ces ondes renvoyées par un ou plusieurs objets, dans le but de détecter des obstacles et leurs distances vis-à-vis du véhicule par exemple. Selon un autre exemple, des capteurs peuvent être un ou plusieurs LIDAR(s) (de l'anglais « Light Detection And Ranging », ou « Détection et estimation de la distance par la lumière » en français) et/ou une ou plusieurs caméras (associées ou non à un capteur de profondeur) pour détecter les objets dans l'environnement du véhicule, leur distance par rapport au véhicule et éventuellement leur forme ou une partie de leur forme (par modélisation tridimensionnelle par exemple). Un objet est détecté lorsqu'une position d'un point situé sur cet objet est obtenu par l'un de ces capteurs.

Des attributs sont associés à chaque objet de la liste L d'objets détectés. Par exemple, chaque capteur du système de détection d'objet(s) 10 fournit un attribut $A_1$ indiquant si un objet a été détecté par ce capteur, et un attribut $A_2$ indiquant un niveau de confiance NC de ce capteur qui a détecté l'objet. Au moins un capteur fournit un attribut de distance longitudinale Dx qui indique une distance longitudinale de l'objet détecté par rapport au véhicule. Le régulateur ACC comprend aussi un système d'évaluation de trajectoire 11 qui permet d'obtenir un attribut de variance de la distance latérale Dy mentionnée ci-dessus.

Le régulateur ACC peut aussi comprendre d'autres systèmes qui permettent d'obtenir d'autres attributs relatifs à des objets détectés.

Le régulateur ACC dispose aussi d'autres systèmes qui permettent d'obtenir des informations générales du véhicule comme sa vitesse.

Les capteurs du véhicule et le système de perception d'objet(s) 10 sont cadencés selon une période, typiquement 50 ms, pour lancer de nouvelles détections d'objets. La liste L d'objets détectés et les attributs associés à ces objets détectés sont alors remis à jour périodiquement.

Le véhicule comprend aussi un dispositif 2 destiné à mettre en œuvre la présente invention et décrit en relation avec la figure 2.

Le dispositif 2 obtient une liste L d'objets détectés et des attributs associés à ces objets détectés à partir d'au moins un capteur du véhicule.

Chaque objet de la liste L est traité par un processus comprenant un ensemble d'opérations suivant. Cet objet est appelé objet courant.

Une fois l'ensemble des objets de la liste L traitée selon la présente invention, la liste L traitée (L' sur la figure 1) est utilisée par le régulateur ACC du véhicule pour sélectionner un objet cible à partir de la liste L' à partir lequel la vitesse du véhicule va être adaptée.

Dans une première opération, un premier attribut $A_1$ de l'objet courant est obtenu à partir d'un ou plusieurs capteurs du véhicule. L'attribut $A_1$ indique si l'objet courant a été détecté par le ou les capteurs.

Dans une deuxième opération, un deuxième attribut $A_2$ de l'objet courant est obtenu. Le deuxième attribut $A_2$ indique un niveau de confiance NC du ou des capteurs qui a (ont) détecté l'objet courant.

Dans une troisième opération, un premier indicateur $I_1$ est associé à l'objet courant. Une première valeur $V_1$ est assignée au premier indicateur $I_1$ si le premier attribut $A_1$ indique que l'objet courant a été détecté par un ou des capteurs du véhicule et que le deuxième attribut $A_2$ indique un niveau de confiance NC supérieur à une première valeur seuil $TH_1$. Une deuxième valeur $V_2$, inférieure à la première valeur $V_1$, est assignée au premier indicateur $I_1$ si le premier attribut $A_1$ indique que l'objet courant n'a pas été détecté par le ou les capteurs du véhicule.

Typiquement, la première valeur $V_1$ est égale à 1 et la deuxième valeur $V_2$ est égale à 0.

Dans une quatrième opération, un deuxième indicateur $I_2$ est associé à l'objet courant. Le deuxième indicateur $I_2$ est obtenu par cumul de valeurs obtenues périodiquement du premier indicateur $I_1$ associé à l'objet courant. Par exemple, une valeur du premier indicateur $I_1$ associé à l'objet courant est obtenue toutes les 50 ms.

Dans une cinquième opération, l'objet courant est maintenu dans la liste L d'objets détectés si le premier indicateur $I_1$, associé à l'objet courant, est égal à la première valeur $V_1$ et si le deuxième indicateur $I_2$, associé à l'objet courant, est supérieur à une deuxième valeur seuil $TH_2$. L'objet courant est supprimé de la liste L d'objets détectés si le deuxième indicateur $I_2$ est inférieur à la deuxième valeur seuil $TH_2$.

Selon un mode de réalisation particulier et non limitatif, la première ou deuxième valeur assignée au premier indicateur $I_1$, associé à l'objet courant, est pondérée en fonction de la nature du ou des capteurs qui a (ont) détecté l'objet courant, d'une distance Dx qui sépare l'objet courant du véhicule et/ou d'une vitesse v du véhicule.

Ce mode de réalisation est particulièrement avantageux à faible vitesse du véhicule car il permet de supprimer les objets fantômes de la liste L d'objets détectés.

Selon un mode de réalisation particulier et non limitatif, la première ou deuxième valeur assignée au premier indicateur $I_1$ est pondérée par un facteur multiplicatif de pondération $W_1$ :

$$I_1' = I_1 * W_1$$

avec $I_1'$ la valeur pondérée du premier indicateur $I_1$.

Selon un exemple, si le premier attribut A1 indique qu'un capteur qui a détecté l'objet courant est une caméra, qu'il est déterminé que l'objet courant et le véhicule sont séparés d'une distance comprise dans une plage de distance prédéterminée, et que la vitesse du véhicule est comprise dans une plage de vitesse prédéterminée, alors le facteur multiplicatif de pondération $W_1$ est égal à 1 et la valeur du premier indicateur $I_1$ reste inchangée. Le facteur de pondération $W_1$ peut prendre une valeur inférieure à 1 si le premier attribut $A_1$ indique que l'objet courant n'a pas été détecté par une caméra, et/ou s'il est déterminé que l'objet courant et le véhicule sont séparés d'une distance qui n'est pas comprise dans la plage de distance prédéterminée, et/ou si la vitesse du véhicule n'est pas comprise dans la plage de vitesse prédéterminée.

Selon un mode de réalisation particulier et non limitatif, la première ou deuxième valeur assignée premier indicateur $I_1$, associé à l'objet courant, est pondérée en fonction de l'attribut de variance de distance latérale Dy de l'objet par rapport au véhicule.

Selon un mode de réalisation particulier et non limitatif, la valeur assignée au premier indicateur $I_1$ est pondérée par un facteur multiplicatif de pondération $W_2$ qui est égal à 1 lorsque la valeur de l'attribut de variance de distance latérale Dy de l'objet par rapport au véhicule est inférieure à une valeur seuil et qui est égal à une valeur prédéterminée inférieure à 1 lors que la valeur de cet attribut est supérieure à cette valeur seuil :

$$I_1' = I_1 * W_2$$

avec $I_1'$ la valeur pondérée du premier indicateur $I_1$.

Ce mode de réalisation est particulièrement avantageux lorsque le véhicule emprunte des routes sinueuses car il permet de réduire la valeur assignée au premier indicateur $I_1$ lorsque la variance de distance latérale est relativement importante. L'impact de ce premier indicateur $I_1$ est moindre pour l'estimation du deuxième indicateur $I_2$ qui reste donc plus stable pendant la traversée de tronçons de route sinueuse.

Selon une variante, la valeur assignée au premier indicateur $I_1$ est pondérée par le produit des facteurs de pondération $W_1$ et $W_2$.

La valeur assignée au premier indicateur $I_1$ peut être pondérée par d'autres attributs associées à un objet de la liste d'objets tel que des attributs relatifs à la trajectoire du véhicule ou encore un attribut d'horodatage des objets détectés de la liste L d'objets détectés.

Selon une variante, un objet courant est supprimé de la liste L d'objets détectés dès que l'horodatage de cet objet courant indique un temps de détection supérieur à une valeur seuil.

Selon un mode de réalisation particulier et non limitatif, le deuxième indicateur $I_2$, associé à un objet courant de la liste L d'objets détectés, est obtenu par une somme pondérée de valeurs $I_1^n$ obtenues périodiquement du premier indicateur associé à l'objet courant.

Selon un mode de réalisation particulier et non limitatif, la valeur du deuxième indicateur $I_2$ est pondérée par un facteur multiplicatif de pondération $W_3^n$ qui dépend de chaque valeur $I_1^n$ du premier indicateur associé à l'objet courant :

$$I_2 = \sum_n I_1^n * W_3^n$$

Selon un mode de réalisation particulier et non limitatif, le facteur de pondération $W_3^n$ dépend du nombre de capteurs du véhicule qui a détecté l'objet courant.

Par exemple, le facteur de pondération $W_3^n$ peut prendre une valeur faible, par exemple 0.1, si aucun capteur ne l'a détecté, c'est-à-dire que l'objet est fantôme (en anglais « seen as virtual »), une valeur un peu plus importante, par exemple 0.3, si un seul capteur du véhicule l'a détecté (radar ou caméra), et une valeur encore plus importante, par exemple 1, si plus d'un capteur du véhicule l'a détecté.

Ce mode de réalisation est avantageux car il permet d'anticiper le basculement du premier indicateur $I_1$ vers la première valeur $V_1$ (détection de l'objet par un capteur du véhicule).

Selon un mode de réalisation particulier et non limitatif, le facteur de pondération $W_3^n$ dépend d'une distance entre le véhicule et l'objet courant et/ou d'une vitesse du véhicule.

Par exemple, plus la vitesse du véhicule est lente et/ou plus la distance entre le véhicule et l'objet courant est importante et plus la facteur de pondération $W_3^n$ est proche de 0. A l'opposé, plus la vitesse du véhicule est importante et/ou plus la distance entre le véhicule et l'objet courant est faible et plus la facteur de pondération $W_3^n$ est proche de 1.

L'obtention du deuxième indicateur $I_2$ est ainsi plus ou moins influencé par le premier indicateur $I_1$ selon la vitesse du véhicule et/ou la distance qui sépare le véhicule de l'objet courant.

Selon une variante, un deuxième indicateur $I_2$, associé à un objet courant, est obtenu par une somme pondérée de valeurs $I_1^n$ obtenues périodiquement du premier indicateur, associé à l'objet courant, si l'objet courant a été détecté par une caméra.

Le processus ci-dessus est décrit par modification d'une même liste L d'objets détectés. Cette liste L comprend des éléments qui correspondent à des objets détectés. Chaque élément relatif à un objet détecté peut comprendre un attribut $A_1$ (première opération), un attribut $A_2$ (deuxième opération). Cet élément peut aussi comprendre un premier indicateur $I_1$ (troisième opération) et un deuxième indicateur $I_2$ (quatrième opération).

La liste L traitée est alors appelée liste L'. Cette liste L' comprend des éléments qui correspondent à des objets détectés. Chaque élément relatif à un objet détecté peut comprendre un attribut $A_1$ (première opération), un attribut $A_2$ (deuxième opération), un premier indicateur $I_1$ (troisième opération) et un deuxième indicateur $I_2$ (quatrième opération).

Dans une variante de mise en œuvre, les listes L et L' sont deux listes distinctes. Un élément est ajouté à la liste L' à la cinquième opération chaque fois que le premier indicateur $I_1$, associé à l'objet courant, est égal à la première valeur $V_1$ et si le deuxième indicateur $I_2$, associé à l'objet courant, est supérieur à une deuxième valeur seuil $TH_2$.

[Fig. 2] illustre schématiquement un dispositif 2 configuré pour réguler la vitesse d'un véhicule à partir d'un objet cible sélectionné à partir d'une liste d'objets détectés par au moins un capteur du véhicule, selon un exemple de réalisation particulier et non limitatif de la présente invention.

Le dispositif 2 est embarqué dans le véhicule.

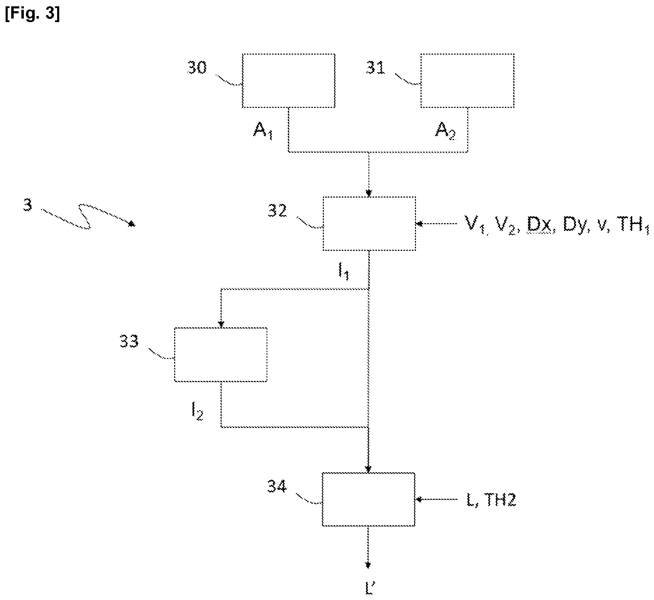

Le dispositif 2 est par exemple configuré pour la mise en œuvre des opérations décrites en regard de la figure 1 et/ou des étapes du procédé décrit en regard de la figure 3. Des exemples d'un tel dispositif 2 comprennent, sans y être limités, un équipement électronique embarqué tel qu'un capteur, un ordinateur de bord d'un véhicule, un calculateur électronique tel qu'une UCE (« Unité de Commande Electronique »), un téléphone intelligent (de l'anglais « smartphone »), une tablette, un ordinateur portable. Les éléments du dispositif 2, individuellement ou en combinaison, peuvent être intégrés dans un unique circuit intégré, dans plusieurs circuits intégrés, et/ou dans des composants discrets. Le dispositif 2 peut être réalisé sous la forme de circuits électroniques ou de modules logiciels (ou informatiques) ou encore d'une combinaison de circuits électroniques et de modules logiciels. Selon différents exemples de réalisation particuliers, le dispositif 2 est couplé en communication avec d'autres dispositifs ou systèmes similaires, par exemple par l'intermédiaire d'un bus de communication ou au travers de ports d'entrée / sortie dédiés.

Le dispositif 2 comprend un (ou plusieurs) processeur(s) 20 configurés pour exécuter des instructions pour la réalisation des étapes du procédé et/ou pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la première mémoire 21.

Selon un exemple de réalisation particulier et non limitatif, le dispositif 2 comprend un bloc 22 d'éléments d'interface pour communiquer avec des dispositifs externes, par exemple un serveur distant ou le « cloud », des capteurs embarqués tels que des radar ou des caméras. Une liste d'objets détectés et des attributs associés à ces objets détectés peuvent être échangés entre le dispositif 2 et ces dispositifs externes. Les éléments d'interface du bloc 22 comprennent une ou plusieurs des interfaces suivantes :

- interface radiofréquence RF, par exemple de type Bluetooth® ou Wi-Fi®, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre exemple de réalisation particulier et non limitatif, le dispositif 2 comprend une interface de communication 23 qui permet d'établir une communication avec d'autres dispositifs embarqués (tels que, par exemple, des radars, des caméras, un système de détection d'objets 10, un système d'évaluation de trajectoire 11 ou encore un régulateur ACC) via un canal de communication 24. Une liste d'objets détectés et des attributs associés à ces objets détectés peuvent être échangés entre le dispositif 2 et ces dispositifs embarqués. L'interface de communication 23 correspond par exemple à un transmetteur configuré pour transmettre et recevoir des informations et/ou des données via le canal de communication 24. L'interface de communication 23 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay ou Ethernet.

Selon un exemple de réalisation particulier et non limitatif, le dispositif 2 peut fournir des signaux de sortie porteur, par exemple d'une liste d'objets détectés, à un ou plusieurs dispositifs externes, tels qu'un écran d'affichage, un ou des haut-parleurs et/ou d'autres périphériques via respectivement des interfaces de sortie non représentées.

[Fig. 3] illustre un organigramme des différentes étapes d'un procédé 3 de régulation de vitesse d'un véhicule à partir d'un objet cible sélectionné à partir d'une liste d'objets détectés par au moins un capteur du véhicule, selon un exemple de réalisation particulier et non limitatif de la présente invention.

Le procédé est par exemple mis en œuvre par un dispositif 2 embarqué dans le véhicule.

Une liste L d'objets détectés et des attributs associés sont obtenus. Les attributs associés à ces objets détectés sont obtenus à partir d'au moins un capteur associé au système de perception d'objets 10 du véhicule.

Chaque objet de la liste L est traité par un ensemble d'étapes suivant. Cet objet est appelé objet courant. La liste traitée est référencée L' sur la figure 1.

Dans une première étape 30, un premier attribut $A_1$ de l'objet courant est obtenu à partir d'au moins un capteur du véhicule. L'attribut $A_1$ indique si l'objet courant a été détecté par ledit au moins un capteur.

Dans une deuxième étape 31, un deuxième attribut $A_2$ de l'objet courant est obtenu. Le deuxième attribut $A_2$ indique un niveau de confiance NC dudit au moins un capteur qui a détecté l'objet courant.

Dans une troisième étape 32, un premier indicateur $I_1$ est associé à l'objet courant. Une première valeur $V_1$ est assignée au premier indicateur $I_1$ si le premier attribut $A_1$ indique que l'objet courant a été détecté par au moins un capteur du véhicule et que le deuxième attribut $A_2$ indique un niveau de confiance NC supérieur à une première valeur seuil $TH_1$. Une deuxième valeur $V_2$, inférieure à la première valeur $V_1$, est assignée au premier indicateur $I_1$ si le premier attribut $A_1$ indique que l'objet courant n'a pas été détecté par ledit au moins un capteur du véhicule.

Dans une quatrième étape 33, un deuxième indicateur $I_2$ est associé à l'objet courant. Le deuxième indicateur $I_2$ est obtenu par cumul de valeurs obtenues périodiquement du premier indicateur $I_1$ associé à l'objet courant.

Dans une cinquième étape 34, l'objet courant est maintenu dans la liste L d'objets détectés si le premier indicateur $I_1$, associé à l'objet courant, est égal à la première valeur $V_1$ et si le deuxième indicateur $I_2$, associé à l'objet courant, est supérieur à une deuxième valeur seuil $TH_2$. L'objet courant est supprimé de la liste L d'objets détectés si le deuxième indicateur $I_2$ est inférieur

à la deuxième valeur seuil $TH_2$.

Selon une variante, les variantes et exemples des opérations décrits en relation avec la figure 1 s'appliquent aux étapes du procédé de la figure 3.

Bien entendu, la présente invention ne se limite pas aux exemples de réalisation décrits ci-avant mais s'étend à un procédé de régulation de vitesse d'un véhicule à partir d'un objet cible sélectionné à partir d'une liste d'objets détectés par au moins un capteur du véhicule, qui inclurait des étapes secondaires sans pour cela sortir de la portée de la présente invention. Il en serait de même d'un dispositif configuré pour la mise en œuvre d'un tel procédé.

L'invention concerne également un véhicule, par exemple automobile ou plus généralement un véhicule à moteur, comprenant le dispositif 2 de la figure 2.

**Revendications**

1. Procédé de régulation de vitesse d'un véhicule à partir d'un objet cible sélectionné à partir d'une liste d'objets détectés par au moins un capteur du véhicule, ledit procédé comprenant les étapes suivantes pour chaque objet courant de la liste d'objets détectés :

   - obtention (30), à partir d'au moins un capteur du véhicule, d'un premier attribut ($A_1$) de l'objet courant indiquant si l'objet courant a été détecté par ledit au moins un capteur ;
   - obtention (31) d'un deuxième attribut ($A_2$) de l'objet courant indiquant un niveau de confiance (NC) dudit au moins un capteur qui a détecté l'objet courant ;
   - assignation (32) d'une première valeur ($V_1$) à un premier indicateur ($I_1$) associé à l'objet courant si le premier attribut ($A_1$) indique que l'objet courant a été détecté par ledit au moins un capteur du véhicule et que le deuxième attribut ($A_2$) indique un niveau de confiance (NC) supérieur à une première valeur seuil ($TH_1$) ;
   - assignation (32) d'une deuxième valeur ($V_2$), inférieure à la première valeur ($V_1$), au premier indicateur ($I_1$) associé à l'objet courant si le premier attribut ($A_1$) indique que l'objet courant n'a pas été détecté par ledit au moins un capteur du véhicule ;
   - obtention (33) d'un deuxième indicateur ($I_2$), associé à l'objet courant, par cumul de valeurs obtenues périodiquement du premier indicateur ($I_1$) associé à l'objet courant ;
   - maintien (34) de l'objet courant dans la liste d'objets détectés si le premier indicateur ($I_1$), associé à l'objet courant, est égal à la première valeur ($V_1$) et si le deuxième indicateur ($I_2$), associé à l'objet courant, est supérieur à une deuxième valeur seuil ($TH_2$) ; et

   - suppression (34) de l'objet courant de la liste d'objets détectés si le deuxième indicateur ($I_2$) est inférieur à la deuxième valeur seuil ($TH_2$).

2. Procédé selon la revendication 1, dans lequel la première ou deuxième valeur assignée au premier indicateur ($I_1$), associé à l'objet courant, est pondérée en fonction de la nature dudit au moins un capteur qui a détecté l'objet courant, d'une distance qui sépare l'objet courant du véhicule et/ou d'une vitesse du véhicule.

3. Procédé selon la revendication 1, dans lequel la première ou deuxième valeur assignée au premier indicateur ($I_1$), associé à l'objet courant, est pondérée en fonction d'un attribut de variance de distance latérale (Dy) de l'objet par rapport au véhicule.

4. Procédé selon la revendication 1, dans lequel le deuxième indicateur ($I_2$), associé à l'objet courant, est obtenu par une somme pondérée de valeurs ($I_1^n$) obtenues périodiquement du premier indicateur associé à l'objet courant.

5. Procédé selon la revendication 4, dans lequel le deuxième indicateur ($I_2$), associé à l'objet courant, est obtenu par une somme pondérée de valeurs ($I_1^n$) obtenues périodiquement du premier indicateur associé à l'objet courant, si un capteur qui a détecté l'objet courant est une caméra.

6. Procédé selon la revendication 4 ou 5, dans lequel chaque pondération de ladite somme pondérée dépend d'une valeur assignée au premier indicateur et/ou d'un nombre de capteurs ayant détectés l'objet courant et/ou d'une vitesse du véhicule.

7. Programme d'ordinateur comportant des instructions pour la mise en œuvre du procédé selon l'une quelconque des revendications précédentes, lorsque ces instructions sont exécutées par un processeur.

8. Support d'enregistrement lisible par un ordinateur sur lequel est enregistré un programme d'ordinateur comprenant des instructions pour l'exécution des étapes du procédé selon l'une des revendications 1 à 6.

9. Dispositif (2) de régulation de vitesse d'un véhicule à partir d'un objet cible sélectionné à partir d'une liste d'objets détectés par au moins un capteur du véhicule, ledit dispositif (2) comprenant une mémoire (21) associée à au moins un processeur (20) configuré pour la mise en œuvre des étapes du procédé selon l'une quelconque des revendications 1 à 6.

**10.** Véhicule comprenant le dispositif (2) selon la revendication 9.

**Patentansprüche**

**1.** Verfahren zur Geschwindigkeitsregelung eines Fahrzeugs von einem Zielobjekt, das aus einer Liste von Objekten ausgewählt ist, die von mindestens einem Sensor des Fahrzeugs erfasst werden, wobei das Verfahren die folgenden Schritte für jedes aktuelle Objekt in der Liste von erfassten Objekten umfasst:

- Gewinnung (30) eines ersten Attributs ($A_1$) des aktuellen Objekts von mindestens einem Sensor im Fahrzeug, das anzeigt, ob das aktuelle Objekt von dem mindestens einen Sensor erfasst wurde;
- Gewinnung (31) eines zweiten Attributs ($A_2$) des aktuellen Objekts, das ein Konfidenzniveau (NC) des mindestens einen Sensors anzeigt, der das aktuelle Objekt erfasst hat;
- Zuordnung (32) eines ersten Wertes ($V_1$) zu einem ersten Indikator ($I_1$), der dem aktuellen Objekt zugeordnet ist, wenn das erste Attribut ($A_1$) anzeigt, dass das aktuelle Objekt von dem mindestens einen Sensor des Fahrzeugs erfasst wurde, und das zweite Attribut ($A_2$) ein Vertrauensniveau (NC) anzeigt, das über einem ersten Schwellenwert ($TH_1$) liegt;
- Zuweisung (32) eines zweiten Werts ($V_2$), der kleiner als der erste Wert (V1) ist, zu dem ersten Indikator ($I_1$), der dem aktuellen Objekt zugeordnet ist, wenn das erste Attribut ($A_1$) anzeigt, dass das aktuelle Objekt nicht von dem mindestens einen Sensor des Fahrzeugs erfasst wurde;
- Erhalten (33) eines zweiten Indikators ($I_2$), der dem aktuellen Objekt zugeordnet ist, durch Aggregieren von Werten, die periodisch von dem ersten Indikator ($I_1$), der dem aktuellen Objekt zugeordnet ist, ermittelt werden;
- das aktuelle Objekt in der Liste der erfassten Objekte belassen (34), wenn der dem aktuellen Objekt zugeordnete erste Indikator ($I_1$) gleich dem ersten Wert ($V_1$) ist und der dem aktuellen Objekt zugeordnete zweite Indikator ($I_2$) größer als ein zweiter Schwellenwert ($TH_2$) ist; und
- Entfernen (34) des aktuellen Objekts aus der Liste der erkannten Objekte, wenn das zweite Flag ($I_2$) unter dem zweiten Schwellenwert ($TH_2$) liegt.

**2.** Verfahren nach Anspruch 1, wobei der erste oder zweite Wert, der dem ersten Anzeiger ($I_1$) zugeordnet ist, der dem aktuellen Objekt zugeordnet ist, in Abhängigkeit von der Art des mindestens einen Sensors, der das aktuelle Objekt erfasst hat, einer Entfernung, die das aktuelle Objekt vom Fahrzeug trennt, und/oder einer Geschwindigkeit des Fahrzeugs gewichtet wird.

**3.** Verfahren nach Anspruch 1, wobei der erste oder zweite Wert, der dem ersten Indikator ($I_1$) zugeordnet ist, der dem aktuellen Objekt zugeordnet ist, in Abhängigkeit von einem Attribut der Seitenabstandsvarianz (Dy) des Objekts in Bezug auf das Fahrzeug gewichtet wird.

**4.** Verfahren nach Anspruch 1, wobei der zweite Indikator ($I_2$), der dem aktuellen Objekt zugeordnet ist, durch eine gewichtete Summe von Werten ( $I_1^{n}$ ) erhalten wird, die periodisch von dem ersten Indikator erhalten werden, der dem aktuellen Objekt zugeordnet ist.

**5.** Verfahren nach Anspruch 4, bei dem der dem aktuellen Objekt zugeordnete zweite Indikator ($I_2$) durch eine gewichtete Summe von Werten ( $I_1^{n}$ ) erhalten wird, die periodisch von dem aktuellen Objekt zugeordneten ersten Indikator erhalten werden, wenn ein Sensor, der das aktuelle Objekt erfasst hat, eine Kamera ist.

**6.** Verfahren nach Anspruch 4 oder 5, wobei jede Gewichtung der gewichteten Summe von einem Wert abhängt, der dem ersten Indikator zugeordnet ist, und/oder von einer Anzahl von Sensoren, die das aktuelle Objekt erfasst haben, und/oder von einer Geschwindigkeit des Fahrzeugs.

**7.** Computerprogramm mit Anweisungen zur Durchführung des Verfahrens nach einem der vorhergehenden Ansprüche, wenn diese Anweisungen von einem Prozessor ausgeführt werden.

**8.** Computerlesbares Aufzeichnungsmedium, auf dem ein Computerprogramm aufgezeichnet ist, das Befehle zum Ausführen der Schritte des Verfahrens nach einem der Ansprüche 1 bis 6 umfasst.

**9.** Vorrichtung (2) zur Geschwindigkeitsregelung eines Fahrzeugs von einem Zielobjekt, das aus einer Liste von Objekten ausgewählt ist, die von mindestens einem Sensor des Fahrzeugs erfasst werden, wobei die Vorrichtung (2) einen Speicher (21) umfasst, der mindestens einem Prozessor (20) zugeordnet ist, der zur Durchführung der Schritte des Verfahrens nach einem der Ansprüche 1 bis 6 konfiguriert ist.

**10.** Fahrzeug mit der Vorrichtung (2) nach Anspruch 9.

## Claims

1. A method for controlling the speed of a vehicle from a target object selected from a list of objects detected by at least one sensor of the vehicle, said method comprising the following steps for each current object of the list of detected objects:

    - obtaining (30), from at least one sensor of the vehicle, a first attribute ($A_1$) of the current object indicating whether the current object has been detected by said at least one sensor;
    - obtaining (31) a second attribute ($A_2$) of the current object indicating a level of confidence (NC) of said at least one sensor which has detected the current object;
    - assigning (32) a first value ($V_1$) to a first indicator ($I_1$) associated with the current object if the first attribute ($A_1$) indicates that the current object has been detected by said at least one sensor of the vehicle and that the second attribute ($A_2$) indicates a level of confidence (NC) greater than a first threshold value ($TH_1$);
    - assigning (32) a second value ($V_2$), lower than the first value ($V_1$), to the first indicator ($I_1$) associated with the current object if the first attribute ($A_1$) indicates that the current object has not been detected by said at least one sensor of the vehicle;
    - obtaining (33) a second indicator ($I_2$), associated with the current object, by cumulating values obtained periodically from the first indicator ($I_1$) associated with the current object;
    - keeping (34) the current object in the list of detected objects if the first indicator (I1), associated with the current object, is equal to the first value ($V_1$) and if the second indicator ($I_2$), associated with the current object, is greater than a second threshold value ($TH_2$); and
    - deletion (34) of the current object from the list of detected objects if the second indicator ($I_2$) is less than the second threshold value ($TH_2$).

2. Method according to claim 1, wherein the first or second value assigned to the first indicator ($I_1$), associated with the current object, is weighted according to the nature of said at least one sensor that has detected the current object, a distance that separates the current object from the vehicle and/or a speed of the vehicle.

3. Method according to claim 1, wherein the first or second value assigned to the first indicator ($I_1$), associated with the current object, is weighted according to an attribute of lateral distance variance (Dy) of the object by report to the vehicle.

4. Method according to claim 1, wherein the second indicator ($I_2$), associated with the current object, is obtained by a weighted sum of values ( $I_1^{n}$ ) obtained periodically from the first indicator associated with the current object.

5. Method according to claim 4, wherein the second indicator ($I_2$), associated with the current object, is obtained by a weighted sum of values ( $I_1^{n}$ ) obtained periodically from the first indicator associated with the current object, if a sensor which has detected the current object is a camera.

6. Method according to claim 4 or 5, wherein each balance of said weighted sum depends on a value assigned to the first indicator and/or on a quantity of sensors having detected the current object and/or on a speed of the vehicle.

7. Computer plan including instructions for implementing the method according to any one of the previous claims, when these instructions are executed by a processor.

8. Computer-readable recording medium on which a computer plan is recorded, comprising instructions for executing the steps of the method according to one of claims 1 to 6.

9. Device (2) for regulating the speed of a vehicle from a target object selected from a list of objects detected by at least one sensor of the vehicle, said device (2) comprising a memory (21) associated with at least one processor (20) configured for implementing the steps of the method according to any one of claims 1 to 6.

10. Vehicle comprising the device (2) according to claim 9.

[Fig. 1]

[Fig. 2]

[Fig. 3]

**EP 4 436 848 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008319670 A1
- EP 3392730 A1